# EUROPEAN PATENT APPLICATION

(11) **EP 4 564 936 A1**
(43) Date of publication of application: **04.06.2025**
(21) Application number: 23851890.6
(22) Date of filing: 09.08.2023
(51) Int. Cl.: H04W 52/02

(54) **COMMUNICATION METHOD AND APPARATUS FOR NON-TERRESTRIAL NETWORK**

(30) Priority: 09.08.2022 CN 202210951403
(71) Applicant: Huawei Technologies Co., Ltd., Shenzhen, Guangdong 518129 (CN)
(72) Inventor: SHEN, Zhongyi, Shenzhen, Guangdong 518129 (CN); HAN, Jing, Shenzhen, Guangdong 518129 (CN); ZHANG, Li, Shenzhen, Guangdong 518129 (CN); LI, Hong, Shenzhen, Guangdong 518129 (CN)
(74) Representative: Maiwald GmbH
(86) International application number: PCT/CN2023/112048
(87) International publication number: WO 2024/032669

(57) **Abstract**

Embodiments of this disclosure provide a communication method and apparatus used in a non-terrestrial network. In the method, a terminal device determines a first stop time of a serving cell of the terminal device. Further, the terminal device enters a relaxed neighboring cell measurement mode based on the first stop time. In this way, according to embodiments of this disclosure, the terminal device can adapt to entry into and exit from a relaxed measurement mode based on a service time of a serving cell, to improve overall energy efficiency of a communication system.

## Description

### TECHNICAL FIELD

This disclosure generally relates to the telecommunication field, and more specifically, to a communication method used in a non-terrestrial network (Non-Terrestrial Network, NTN), a terminal device, a medium, and a program product.

### BACKGROUND

As communication technologies develop, an increasing quantity of communication scenarios may involve a non-terrestrial network (Non-Terrestrial Network, NTN). In an NTN communication scenario, a network device deployed on an air platform (for example, deployed on a satellite or an uncrewed aerial vehicle) provides cell coverage for a terminal device.

In addition, a relaxed measurement mode (for example, a relaxed neighboring cell measurement mode and a relaxed serving cell measurement mode) has been introduced for the terminal device. In the relaxed neighboring cell measurement mode, the terminal device can stop measuring a neighboring cell. In the relaxed serving cell measurement mode, the terminal device can reduce a measurement frequency for a serving cell. Generally, the terminal device determines, based on measurement of a reference signal from the serving cell, whether to enter the relaxed neighboring cell measurement mode or the relaxed serving cell measurement mode. As communication scenarios become increasingly diverse, a criterion used by the terminal device to determine whether to enter the relaxed neighboring cell measurement mode or the relaxed serving cell measurement mode may be further adapted.

### SUMMARY

This application provides a communication method and apparatus used in a non-terrestrial network, to improve an energy saving level of a terminal device.

According to a first aspect, a communication method used in a non-terrestrial network is provided. An execution body of the method may be a terminal device, or may be a chip used in a terminal device. Descriptions are provided below by using an example in which the execution body is the terminal device. In the method, the terminal device determines a first stop time of a serving cell of the terminal device. Further, the terminal device enters a relaxed neighboring cell measurement mode based on the first stop time. In the foregoing manner, the terminal device adapts entry into and exit from a relaxed mode based on the first stop time of the serving cell, to improve energy efficiency of a communication system. In some embodiments, based on ephemeris information related to cell coverage or an indication of a network device, the terminal device may determine to enter or exit the relaxed measurement mode. In this manner, the terminal device can accurately determine, based on a cell coverage feature of the communication system, that the terminal device can enter the relaxed measurement mode, to improve an energy saving level of the terminal device.

In some implementations, the terminal device determines that first duration from the first stop time is greater than a first threshold, and the terminal device enters the relaxed neighboring cell measurement mode. In other words, when the first duration from the first stop time is long, the terminal device determines that the terminal device is in stable cell coverage in a future period of time. Further, the terminal device can enter the relaxed neighboring cell measurement mode, to improve an energy saving level.

In some implementations, the terminal device determines that first duration from the first stop time is less than or equal to a first threshold, and the terminal device exits the relaxed neighboring cell measurement mode. In other words, when the first duration from the first stop time is short, the terminal device estimates that cell reselection may be performed. Further, the terminal device can exit the relaxed neighboring cell measurement mode, to reduce a cell reselection delay.

In some implementations, the terminal device determines that first duration from the first stop time is greater than a second threshold, and the terminal device enters a relaxed serving cell measurement mode. In other words, when the first duration from the first stop time is long, the terminal device determines that the terminal device is in stable cell coverage in a future period of time. Further, the terminal device may alternatively enter the relaxed serving cell measurement mode, to further improve an energy saving level. In addition, duration used for determining whether to enter the relaxed neighboring cell measurement mode and duration used for determining whether to enter the relaxed serving cell measurement mode may be different. In this way, entry into the two relaxed measurement modes can be determined more flexibly.

In some implementations, the terminal device determines that first duration from the first stop time is less than or equal to a second threshold, and the terminal device exits the relaxed serving cell measurement mode. In other words, when the first duration from the first stop time of the serving cell is short, the terminal device estimates that communication performance of a serving cell may be affected. Further, the terminal device may exit the relaxed serving cell measurement mode, to improve a capability of sensing a change of the serving cell.

In some implementations, a value of the first threshold and/or a value of the second threshold may be at least one of a predefined threshold, a threshold indicated by the network device, or duration required for measuring a neighboring cell. In this way, the first threshold for entering the relaxed neighboring cell measurement mode, and the first threshold and the second threshold for entering the relaxed serving cell measurement mode may be flexibly configured. In addition, a time domain resource for neighboring cell measurement or inter-frequency measurement may be accurately reserved for the terminal device.

In some implementations, the terminal device determines that the terminal device is out of cell coverage after the first stop time, and enters the relaxed neighboring cell measurement mode. In other words, when determining that there is no cell coverage after the serving cell is stopped, the terminal device can avoid performing meaningless neighboring cell measurement. This can further improve an energy saving level of the terminal device.

In some implementations, the terminal device determines that the terminal device is out of cell coverage after the first stop time, and the terminal device still enters the relaxed serving cell measurement mode. This can further improve an energy saving level of the terminal device.

In some implementations, the terminal device determines, based on the ephemeris information of a cell, that the terminal device is out of cell coverage after the first stop time. In other words, the terminal device learns of a cell coverage status of the terminal device in a future period of time by using a cell coverage feature of the non-terrestrial network, to guide an energy saving policy of the terminal device.

In some implementations, the terminal device receives an indication of entering the relaxed neighboring cell measurement mode. In other words, the network device can determine a cell coverage status of the terminal device based on a running status of a satellite or another satellite deployed for the network device. Further, the network device can send, to the terminal device, the indication of entering the relaxed neighboring cell measurement mode, to improve an energy saving level of the terminal device.

In some implementations, after reselecting a neighboring cell as a serving cell, the terminal device is in a non-relaxed neighboring cell measurement mode and/or a non-relaxed serving cell measurement mode in a time period corresponding to second duration. In other words, after reselecting a new cell, the terminal remains in the non-relaxed neighboring cell measurement mode and/or the non-relaxed serving cell measurement mode for a period of time. In this way, after reselection, the terminal device measures the neighboring cell and/or the serving cell in a relaxed measurement mode (for example, the non-relaxed neighboring cell measurement mode and the non-relaxed serving cell measurement mode) in a period of time, so that the terminal does not directly perform relaxed measurement when determining, based on a serving cell measurement result, that a relaxed measurement condition is not met (to avoid reselecting a cell with poor quality of service because a measurement result accidentally meets a reselection condition). In this way, robustness of cell reselection performed by the terminal device is improved.

According to a second aspect, a communication method used in a non-terrestrial network is provided. An execution body of the method may be a network device, or may be a chip used in the network device. Descriptions are provided below by using an example in which the execution body is the network device. In the method, the network device determines a first stop time of a serving cell of a terminal device. The first stop time is used by the terminal device to enter a relaxed neighboring cell measurement mode. Then, the network device sends an indication for the first stop time. In the foregoing manner, the terminal device can adapt entry into and exit from a relaxed mode based on the first stop time of the serving cell, to improve energy efficiency of a communication system.

In some implementations, the network device sends an indication for a threshold. The threshold is used by the terminal device to determine to enter the relaxed neighboring cell measurement mode and/or enter a relaxed serving cell measurement mode. In this way, the terminal device can enter the relaxed neighboring cell measurement mode and/or the relaxed serving cell measurement mode based on the threshold and the first stop time of the serving cell, to improve an energy saving level.

In some implementations, the threshold is further used by the terminal device to determine to exit the relaxed neighboring cell measurement mode and/or exit the relaxed serving cell measurement mode. In this way, the terminal device can exit the relaxed neighboring cell measurement mode and/or the relaxed serving cell measurement mode based on the threshold and the first stop time of the serving cell, to reduce a cell reselection delay.

In some implementations, the network device sends ephemeris information of a cell. The ephemeris information is used by the terminal device to enter the relaxed neighboring cell measurement mode and/or enter the relaxed serving cell measurement mode. The terminal device learns of a cell coverage status of the terminal device in a future period of time by using a cell coverage feature of the non-terrestrial network, to guide an energy saving policy of the terminal device.

In some implementations, the network device sends an indication of entering the relaxed neighboring cell measurement mode. In this way, the network device can send, to the terminal device, the indication of entering the relaxed neighboring cell measurement mode, to improve an energy saving level of the terminal device.

According to a third aspect, a communication apparatus is provided. For beneficial effects, refer to the descriptions in the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function. In a possible design, the communication apparatus includes: a transceiver module, configured to determine a first stop time of a serving cell of the terminal device; and a processing module, configured to enter a relaxed neighboring cell measurement mode based on the first stop time. These modules may perform corresponding functions in the method example in the first aspect. For details, refer to the detailed descriptions in the method example. Details are not described herein again.

According to a fourth aspect, a communication apparatus is provided. For beneficial effects, refer to the descriptions in the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function. In a possible design, the communication apparatus includes: a processing module, configured to determine a first stop time of a serving cell of a terminal device, where the first stop time is used by the terminal device to enter a relaxed neighboring cell measurement mode; and a transceiver module, configured to send an indication for the first stop time to the terminal device. These modules may perform corresponding functions in the method example in the second aspect. For details, refer to the detailed descriptions in the method example. Details are not described herein again.

According to a fifth aspect, a communication apparatus is provided. The communication apparatus may be a terminal device or a chip disposed in the terminal device in the foregoing method embodiments. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a sixth aspect, a communication apparatus is provided. The communication apparatus may be a network device or a chip in the network device in the foregoing method embodiments. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a seventh aspect, a communication apparatus is provided. The apparatus includes a processor and a memory storing instructions. When the instructions are executed by the processor, a terminal device is enabled to perform the method according to any one of the first aspect and the implementations of the first aspect.

According to an eighth aspect, a communication apparatus is provided. The apparatus includes a processor and a memory storing instructions. When the instructions are executed by the processor, a network device is enabled to perform the method according to any one of the second aspect and the implementations of the second aspect.

According to a ninth aspect, this application provides a computer-readable storage medium. The computer-readable storage medium stores a computer program. When the computer program is run, the method performed by the terminal device in the foregoing aspects is implemented.

According to a tenth aspect, this application provides a computer-readable storage medium. The computer-readable storage medium stores a computer program. When the computer program is run, the method performed by the network device in the foregoing aspects is implemented.

According to an eleventh aspect, a computer program product is provided. The computer program product includes computer program code. When the computer program code is run, the method performed by the terminal device in the foregoing aspects is performed.

According to a twelfth aspect, a computer program product is provided. The computer program product includes computer program code. When the computer program code is run, the method performed by the network device in the foregoing aspects is performed.

According to a thirteenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to a fourteenth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

According to a fifteenth aspect, this application further provides a communication method, including: A network device determines a first stop time of a serving cell of a terminal device. The first stop time is used by the terminal device to enter a relaxed neighboring cell measurement mode. The network device sends an indication for the first stop time to the terminal device. The terminal device determines the first stop time of the serving cell of the terminal device. The terminal device enters the relaxed neighboring cell measurement mode based on the first stop time.

According to a sixteenth aspect, this application further provides a communication system, including a terminal device configured to perform the method in the first aspect and a network device configured to perform the method in the second aspect.

According to a seventeenth aspect, a communication apparatus is provided, including a processor and an interface circuit. The interface circuit is configured to receive a signal from another communication apparatus and transmit the signal to the processor, or send a signal from the processor to another communication apparatus. The processor is configured to implement the method in any one of the first aspect and the implementations of the first aspect by using a logic circuit or executing code instructions.

According to an eighteenth aspect, a communication apparatus is provided, including a processor and an interface circuit. The interface circuit is configured to receive a signal from another communication apparatus and transmit the signal to the processor, or send a signal from the processor to another communication apparatus. The processor is configured to implement the method in any one of the second aspect and the implementations of the second aspect by using a logic circuit or executing code instructions.

### BRIEF DESCRIPTION OF DRAWINGS

Features, advantages, and other aspects of implementations of this disclosure become more apparent with reference to the accompanying drawings and with reference to the following detailed descriptions. Several implementations of this disclosure are shown herein by way of example rather than limitation. In the accompanying drawings:
FIG. 1 shows a possible communication network according to an embodiment of this application;
FIG. 2 is a schematic flowchart of entering or exiting a relaxed measurement mode by a terminal device according to an embodiment of this application;
FIG. 3A and FIG. 3B are time sequence diagrams of entering or exiting a relaxed measurement mode according to an embodiment of this application;
FIG. 4 is a flowchart of implementation at a terminal device according to an embodiment of this application;
FIG. 5 is a flowchart of implementation at a network device according to an embodiment of this application;
FIG. 6 is a simplified block diagram of an example device in a possible implementation according to an embodiment of this application;
FIG. 7 is a simplified block diagram of an example device in a possible implementation according to an embodiment of this application; and
FIG. 8 is a simplified block diagram of an example device in a possible implementation according to an embodiment of this application.

### DESCRIPTION OF EMBODIMENTS

To make objectives, technical solutions, and advantages of this application clearer, the following further describes this application in detail with reference to the accompanying drawings. Specific operation methods, function descriptions, and the like in method embodiments may also be applied to apparatus embodiments or system embodiments.

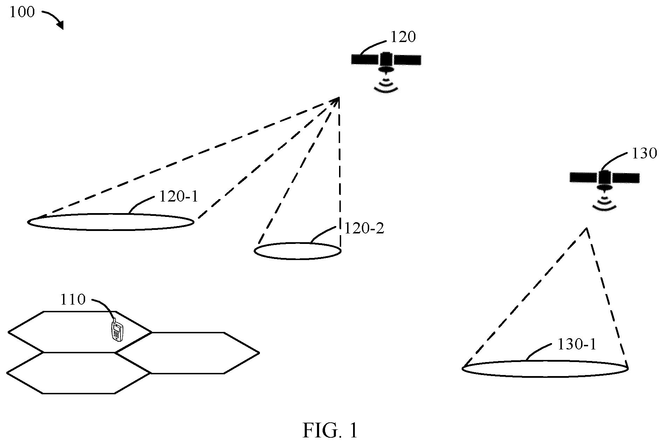

As shown in FIG. 1, a communication method provided in an embodiment of this application may be applied to a wireless communication system 100. In the communication system 100, a terminal device 110, a network device 120 that provides a cell 120-1 and a cell 120-2, and a network device 130 that provides a cell 130-1 are shown.

It should be understood that the foregoing wireless communication system is applicable to both a low frequency scenario (sub 6G) and a high frequency scenario (above 6G). An application scenario of the wireless communication system includes but is not limited to an existing communication system such as a 5th generation (5G) system or a new radio (new radio, NR) communication system, a future evolved public land mobile network (public land mobile network, PLMN) system, or the like.

The terminal device 110 shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device 110 may alternatively be a communication chip having a communication module, or may be a vehicle having a communication function, or a vehicle-mounted device (for example, a vehicle-mounted communication apparatus or a vehicle-mounted communication chip), or the like. The terminal device 110 may have a wireless transceiver function. The terminal device 110 can communicate (for example, wireless communication) with one or more network devices in one or more communication systems, and accepts a network service provided by a network device. The network device herein includes but is not limited to the network devices (120 and 130) shown in the figure.

The terminal device 110 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, or another processing device connected to a wireless modem, a vehicle-mounted device, a wearable device, a terminal apparatus in a future 5G network, a terminal apparatus in a further evolved PLMN, or the like.

The terminal device 110 may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device 110 may be deployed on land, including an indoor or outdoor terminal device, or a handheld or vehicle-mounted terminal device; the terminal device 110 may be deployed on water (for example, on a ship); or the terminal device 110 may be deployed in air (for example, on an aircraft, a balloon, or a satellite). The network device (120 or 130) may be an access network device (or referred to as an access network site). The access network device is a device that provides a network access function, for example, a radio access network (radio access network, RAN) base station. The network device (120 or 130) may specifically include a base station (base station, BS), or include a base station, a radio resource management device configured to control the base station, and the like. The network device (120 or 130) may alternatively include a relay station (relay device), an access point, a base station or an NR base station in a 5G network, a base station in a future evolved PLMN, or the like. The network device (120 or 130) may be a wearable device or a vehicle-mounted device. Alternatively, the network device (120 or 130) may be a communication chip having a communication module.

For example, the network device (120 or 130) includes but is not limited to: a gNodeB (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB or home NodeB, HNB), a baseband unit (baseband unit, BBU), a transmitting and receiving point (transmitting and receiving point, TRP), a transmitting point (transmitting point, TP), a mobile switching center, a base transceiver station (base transceiver station, BTS) in a global system for mobile communications (global system for mobile communication, GSM) or code division multiple access (code division multiple access, CDMA) network, a node base station (node base station, NB) in wideband code division multiple access (wideband code division multiple access, WCDMA), an evolved (evolutional) NB (eNB or eNodeB) in LTE, a base station device in a future 5G network, an access network device in a future evolved PLMN, a wearable device, or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. Examples of the network device include but are not limited to a NodeB (NodeB or NB), an evolved NodeB (eNodeB or eNB), a next generation NodeB (gNB), a transmission and reception point (TRP), a remote radio unit (RRU), a radio head (RH), a remote radio head (RRH), an IAB node, a low power node, such as a femto node, a pico node, a reconfigurable smart surface (RIS), and a network-controlled repeater.

In addition, the network device (120 or 130) may be connected to a core network (core network, CN) device, and the core network device may be configured to provide a core network service for the terminal device 110 that accesses the network device (120 or 130). The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

As described above, communication scenarios become increasingly diverse, a criterion used by the terminal device to determine whether to enter a relaxed measurement mode (for example, a relaxed neighboring cell measurement mode or a relaxed serving cell measurement mode) may be further adapted. In a solution, the terminal device measures a reference signal of a serving cell (for example, measures a reference signal received power RSRP associated with the serving cell). Based on a measurement result of the serving cell, for example, the measured RSRP shows little variation in a period of time, the terminal device may enter the relaxed neighboring cell measurement mode or the relaxed serving cell measurement mode. In the relaxed neighboring cell measurement mode, the terminal device does not measure a neighboring cell. In this application, measurement performed by the terminal device on a neighboring cell includes measurement performed on an intra-frequency neighboring cell and measurement performed on an inter-frequency neighboring cell. It should be understood that the measurement performed by the terminal device on the neighboring cell further includes measurement performed on any network cell that can provide a data network access capability for the terminal device. This is not limited in this disclosure. In the relaxed serving cell measurement mode, the terminal device measures a serving cell in a periodicity greater than that in a non-relaxed serving cell measurement mode. In this manner, the terminal device can save energy. However, for an internet of things terminal device covered by an NTN cell, for example, a terminal device in narrowband internet of things (NB-IoT) or enhanced machine type communication (eMTC) (which is merely an example, and is not limited in this disclosure), an energy saving level of the terminal device can be further improved.

In an existing NTN, a ground terminal device (User Equipment, user terminal) communicates with a satellite. Satellites are classified into the following types based on different orbit heights and different working modes: GEO (Geostationary Earth orbit, geostationary earth orbit), LEO (low-earth orbit, low-earth orbit), and MEO (medium Earth orbit, medium earth orbit). The GEO satellite is stationary relative to the ground, and a location of a cell covered by the GEO satellite on the ground remains unchanged. A non-GEO satellite is always moving relative to the ground. That is, a cell covered by the satellite is always moving on the ground. Time for which a terminal device on the ground is covered by a cell is limited. Therefore, an NTN cell broadcasts a service stop time of the cell in a SIB (system information block, system information block). In this way, the terminal device knows when the serving cell stops covering a current area.

For a terminal device in an RRC (radio resource control, radio resource control) idle state, when a specific condition is met, the terminal device performs a cell reselection procedure, and reselects a neighboring cell that meets a condition. For the NTN network, the terminal device may start and complete neighboring cell measurement and cell reselection after determining a service stop time of a current cell. Otherwise, if the terminal device does not find a neighboring cell before the current serving cell stops serving, the terminal device does not reselect another cell, and the terminal device needs to perform cell search and cell selection again for a long period of time.

In other words, if quality of service of the serving cell is always stable, and the terminal device determines, only based on the quality of the serving cell, to enter or exit a measurement manner mode, the terminal device may not exit the relaxed measurement mode even if the coverage of the serving cell is to be stopped. This causes a long cell reselection delay. In addition, after the terminal device determines that the coverage of the serving cell stops, the terminal device is out of cell coverage, and the terminal device can avoid performing meaningless neighboring cell measurement (intra-frequency/inter-frequency cell measurement). In conclusion, due to particularity of the NTN network, determining, by the terminal device based on a measurement result of the serving cell, whether to enter the relaxed measurement mode is no longer applicable to a requirement of the NTN network.

To resolve the foregoing problem, an embodiment disclosed in this application provides a communication method for the NTN network. In the method, the terminal device determines a first stop time of a serving cell of the terminal device. Further, the terminal device enters the relaxed neighboring cell measurement mode based on the first stop time. In the foregoing manner, the terminal device can adapt entry into and exit from a relaxed measurement mode based on the first stop time of the serving cell, to improve energy efficiency of a communication system. In some embodiments, based on ephemeris information related to cell coverage or an indication of a network device, the terminal device may determine to enter or exit the relaxed measurement mode.

In this manner, the terminal device can accurately determine, based on a cell coverage feature of the communication system, that the terminal device can enter the relaxed measurement mode, to improve an energy saving level of the terminal device. It should be understood that although the foregoing mainly describes an NTN network communication scenario, embodiments disclosed in this application may be applicable to any other communication scenario. This is not limited. To discuss embodiments disclosed in this application more clearly, embodiments disclosed in this application are described with reference to FIG. 1 to FIG. 6.

As shown in FIG. 1, the cells 120-1 and 120-2 are provided by a network device deployed on a satellite 120, and the cell 130-1 is provided by a network device deployed on a satellite 130. This is not specifically distinguished in this disclosure. It should be understood that quantities of terminal devices, network devices, and cells shown in FIG. 1 are merely examples. There may be more or fewer terminal devices, network devices, and cells. This is not limited in this disclosure.

As shown in FIG. 1, without any limitation, it is assumed that the cell 120-1 is a serving cell of the terminal device 110, and the cell 120-2 and the cell 130-1 are intra-frequency or inter-frequency neighboring cells of the serving cell 120-1. In some embodiments, based on quality of service of the serving cell 120-1, the terminal device may determine to enter or exit a relaxed neighboring cell measurement mode for the neighboring cell 120-2 or 130-1, and determine to enter or exit a relaxed serving cell measurement mode for the cell 120-1.

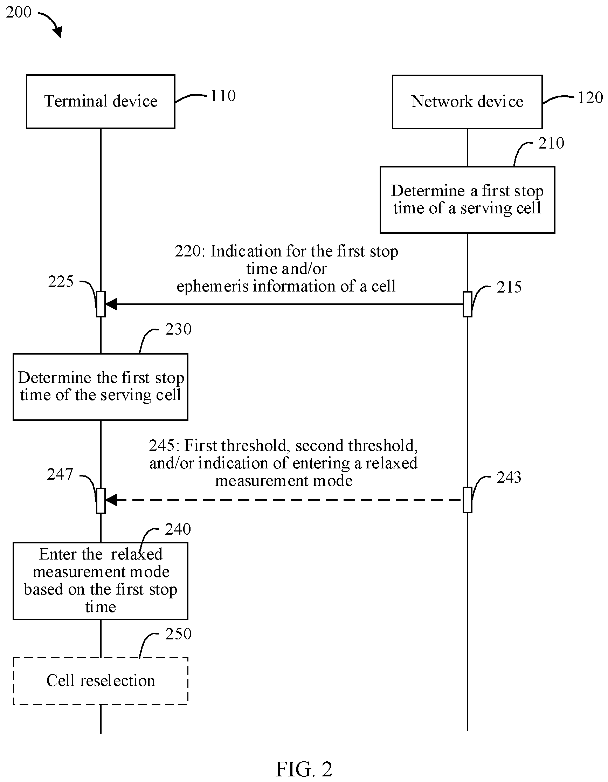

FIG. 2 is a schematic flowchart 200 of entering or exiting a relaxed measurement mode by a terminal device according to an embodiment of this application. For clarity of discussion, the signaling process 200 is to be discussed with reference to FIG. 1. In the signaling process 200, the network device 120 determines (210) a first stop time of the serving cell 120-1 of the terminal device 110. The first stop time is used by the terminal device 110 to enter a relaxed neighboring cell measurement mode. In some embodiments, the network device 120 may determine, based on ephemeris information of a satellite platform deployed by the network device 120, the first stop time of the serving cell 120-1 for the terminal device 110. In addition, in some embodiments, the network device 120 may further determine the first stop time of the serving cell 120-1 for the terminal device 110 based on location information, speed information, and direction information of the user equipment. In some other embodiments, the network device 120 may determine the first stop time in any other manner based on a relative location relationship between the satellite platform deployed by the network device 120 and the terminal device 110.

In a possible design, the network device 120 sends (215) an indication 220 for the first stop time to the terminal device 110. Correspondingly, the terminal device 110 receives (225) the indication 220 from the network device 120. In some embodiments, the network device 120 may further send, to the terminal device 110, ephemeris information of a cell (for example, an ephemeris of the serving cell 120-1 or 120-2) related to the network device 120. In the example disclosed in this application, without any limitation, the ephemeris information of the cell may be any related movement information such as a speed and a location of a satellite serving the network device and/or any related movement information such as a speed and a location of a cell provided by the network device. In some embodiments, the ephemeris information of the cell may also be considered as coverage timing information of an NTN cell for a specific geographic area. In some embodiments, the network device 120 may further send, to the terminal device 110, ephemeris information of a cell provided by another network device (for example, the network device 130).

After receiving the indication 220, the terminal device 110 determines (230) the first stop time of the serving cell 120-1. In some embodiments, the terminal device 110 directly determines the first stop time based on the indication for the first stop time that is sent by the network device 120. For example, the terminal device 110 may receive the ephemeris information of the cell from the network device 120, and the terminal device 110 autonomously determines the first stop time based on the ephemeris information of the cell. For example, the ephemeris information of the cell (for example, ephemeris information of all cells in an NTN network) may be preconfigured for the terminal device 110, and the terminal device 110 determines the first stop time based on the preconfigured ephemeris information. In some other embodiments, the terminal device 110 may determine the first stop time in any other manner without relying on the indication from the network device 120. This is not limited in this embodiment disclosed in this application.

Then, the terminal device 110 enters (240) the relaxed neighboring cell measurement mode based on the first stop time. In some embodiments, the terminal device 110 determines that first duration from the first stop time is greater than a first threshold, and the terminal device 110 enters the relaxed neighboring cell measurement mode. As described above, in some other embodiments, the terminal device 110 needs to continuously measure the serving cell for a period of time. If quality of the serving cell changes slightly, the terminal device 110 performs relaxed measurement (does not measure a neighboring cell). Therefore, if this entry manner is used, the terminal device still needs to perform non-relaxed measurement for a long period of time. Because a cell coverage time is very short in the NTN network, the terminal actually performs very short relaxed measurement. This is not conducive to energy saving. However, for the NTN network, a propagation path from a network device to a terminal device is a line-of-sight path, a propagation environment is fixed, and a cell coverage time can also be estimated. Therefore, if the terminal device 110 is covered by an NTN serving cell and the duration from the stop time of the serving cell is long enough, the terminal device may estimate that the terminal device is to be in a stable communication environment in a future period of time. In this case, the terminal device 110 may choose to directly enter the relaxed neighboring cell measurement mode, instead of continuously measuring a neighboring cell. In this way, the terminal device 110 can further improve an energy saving level.

For the first threshold, in some embodiments, the first threshold may be a preconfigured duration value. For example, the first threshold may be preconfigured as 10 seconds, or may be preconfigured as 10 discontinuous reception (DRX) lengths. For example, the first threshold may alternatively be indicated by the network device 120. For example, the network device 120 sends (243) an indication 245 of the first threshold to the terminal device 110, and the first threshold may be indicated as 10 seconds or 10 (DRX) lengths. Correspondingly, the terminal device 110 receives (247) the indication 245 from the network device 120. For example, the first threshold may also be a time (that is, duration required for completing search/measurement) for completing search/measurement of cells in one or more frequencies by the terminal device 110. For example, if a time for completing intra-frequency cell search/measurement by the terminal device 110 is 10 DRX lengths, the first threshold is 10 DRX lengths. In this way, the terminal device 110 can also autonomously determine the first threshold based on a search/measurement capability of the terminal device 110. In an example, when the terminal device 110 reselects the serving cell 120-1, the terminal device 110 determines, by using the foregoing steps, that the first stop time of the serving cell 120-1 is T0, and determines that the first duration is 10 DRX lengths. Therefore, the terminal device 110 may enter the relaxed neighboring cell measurement mode since 10 DRX lengths earlier than T0.

In addition, as described above, in some cases, the terminal device enters or exits the relaxed measurement mode based on a measurement result for the serving cell 120-1. However, as described above, in the NTN network, quality of the serving cell changes slightly. Therefore, even when coverage of the serving cell 120-1 is to stop, the terminal device 110 may be still in a relaxed measurement state. This may be unfavorable for the terminal device 110 to perform timely cell reselection. In view of this, in some embodiments, the terminal device 110 determines that the first duration from the first stop time is less than or equal to the first threshold, and the terminal device 110 exits the relaxed neighboring cell measurement mode. For example, if the terminal device 110 determines that a current time is less than 10 DRX lengths from the first stop time, the terminal device 110 needs to exit the relaxed neighboring cell measurement mode (for example, start to measure a neighboring cell). In this way, the terminal device can exit the relaxed neighboring cell measurement mode in advance based on the stop time of the serving cell, to reduce a cell reselection delay.

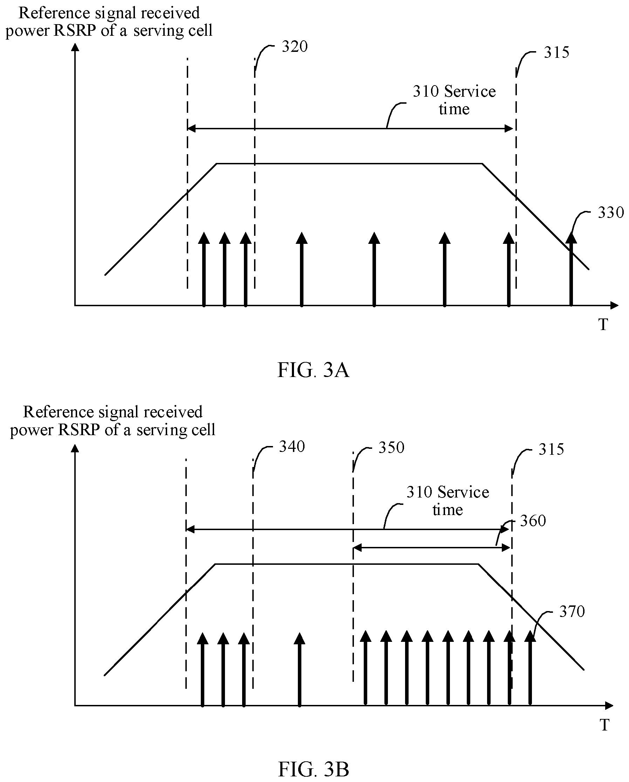

For example, the terminal device 110 may further determine, based on the first stop time, to enter or exit a relaxed serving cell measurement mode. In some embodiments, the terminal device 110 determines that the first duration from the first stop time is greater than a second threshold, and the terminal device 110 enters the relaxed serving cell measurement mode. In some embodiments, similar to the first threshold, the second threshold may also be a predefined threshold, a threshold indicated by the network device 120, and/or duration required by the terminal device 110 for measuring a neighboring cell. In some embodiments, the second threshold may be equal to or different from the first threshold. In this way, the first threshold and the second threshold can be separately configured, so that the terminal device 110 can flexibly determine to enter or exit the relaxed neighboring cell measurement mode and the relaxed serving cell measurement mode. Further, in some embodiments, similar to exiting the relaxed neighboring cell measurement mode, when the terminal device 110 determines that the first duration from the first stop time is less than or equal to the second threshold, the terminal device exits the relaxed serving cell measurement mode. In this way, the terminal device can exit the relaxed serving cell measurement mode in advance based on the stop time of the serving cell, to assist in potential cell reselection. For clear discussion, refer to FIG. 3A and FIG. 3B. An embodiment in which the terminal device 110 enters or exits the relaxed measurement mode based on the stop time of the serving cell is further described.

FIG. 3A is a time sequence diagram of entering or exiting a relaxed measurement mode according to some embodiments. For ease of discussion, FIG. 3A is discussed with reference to FIG. 1. As shown in FIG. 3A, it is assumed that duration 310 is a time length in which the serving cell 120-1 serves or covers the terminal device 110 (which may also be referred to as a service time 310 in this embodiment disclosed in this application). Without any limitation, it is assumed that the terminal device 110 enters a relaxed measurement mode (for example, the relaxed serving cell measurement mode, the relaxed neighboring cell measurement mode, or both) at a time 320 based only on a measurement result for the serving cell 120-1, so that the serving cell is measured less frequently and/or measurement of a neighboring cell is stopped. In this way, as described above, because the NTN cell 120-1 is in stable cell coverage, a measurement result of the serving cell measured by the terminal device 110 changes slightly in the service time 310. Therefore, even if a first stop time 315 of the serving cell 120-1 for the terminal device 110 is to approach, the terminal device 110 may not exit the relaxed measurement mode. The terminal device 110 may not determine significant degradation in quality of service of the serving cell 120-1 until a time 330, and exits the relaxed neighboring cell measurement mode and/or the relaxed serving cell measurement mode. This causes a long reselection delay. In addition, for the relaxed neighboring cell measurement mode at 320, it is assumed that the terminal device 110 may exit the relaxed neighboring cell measurement mode at 330, and perform measurement on a neighboring cell. Consequently, a delay in a cell reselection process is longer.

FIG. 3B is a time sequence diagram of entering or exiting a relaxed measurement mode according to an embodiment disclosed in this application. As shown in FIG. 3B, it is assumed that the terminal device 110 enters a relaxed measurement mode (for example, the relaxed serving cell measurement mode, the relaxed neighboring cell measurement mode, or both) at 340. A time 350 is earlier than the first stop time 315 by duration 360. The duration 360 may be the first threshold or the second threshold. In this way, because the first duration between the determining time 340 and the first stop time 315 is greater than the duration 360 (for example, the first threshold and/or the second threshold), the terminal device 110 may enter the relaxed measurement mode at 340. During the relaxed mode (the time 340 to the time 350), the terminal device 110 reduces frequency of measuring the serving cell (for example, measure the serving cell 120 with a longer periodicity than that in a non-relaxed measurement mode). In addition, the terminal device no longer measures a neighboring cell. As described above, as time progresses, the terminal device 110 determines that duration from the first stop time 315 is less than or equal to the duration 360, and the terminal device may exit the relaxed measurement mode. In this way, based on the measurement result for the serving cell, the terminal device may have determined, at a time 370 (before the time 330), that cell reselection needs to be initiated. In this way, based on the first stop time of the serving cell 120-1 and the first threshold and/or the second threshold, the terminal device 110 may determine earlier that cell reselection is required, to reduce a reselection delay. In addition, because the terminal device exits the relaxed neighboring cell measurement mode at 350, the terminal device already has a measurement result for the neighboring cell in advance, to further reduce a cell reselection delay.

As shown in FIG. 2, in some embodiments, after the terminal device 110 exits the relaxed neighboring cell measurement mode, the terminal device 110 may also exit the relaxed serving cell measurement mode. In this case, the terminal device 110 has exited a relaxed measurement mode. That is, the terminal device 110 starts to perform a measurement operation for a radio frequency signal. Even if the terminal device still remains in another relaxed measurement mode, there is still no good energy saving effect. Therefore, after exiting the relaxed neighboring cell measurement mode, the terminal device 11 also exits the relaxed serving cell measurement mode, and this manner facilitates cell reselection. For example, in addition to entering the relaxed serving cell measurement mode when the first duration is greater than the second threshold, the terminal device 110 may also enter the relaxed serving cell measurement mode after entering the relaxed neighboring cell measurement mode. For example, when the terminal device 110 determines that the first duration is greater than the first threshold, and then enters the relaxed neighboring cell measurement mode, the terminal device 110 may also enter the relaxed serving cell measurement mode. On the contrary, if the terminal device 110 exits the relaxed neighboring cell measurement mode when determining that the first duration is less than or equal to the first threshold, the terminal device 110 also exits the relaxed serving cell measurement mode.

In some embodiments, the terminal device 110 may further determine, with reference to the first threshold, the second threshold, and the measurement result for the serving cell, whether to enter the relaxed measurement mode. For example, when the terminal device 110 determines, based on the measurement result for the serving cell 120-1, that the terminal device 110 can enter the relaxed measurement mode (for example, an RSRP of the serving cell changes slightly in a period of time), the terminal device may enter or exit the relaxed measurement mode depending on whether the first duration is greater than the first threshold and/or the second threshold. For example, if the terminal device 110 determines, based on the measurement result for the serving cell 120-1, that the terminal device 110 can enter the relaxed neighboring cell measurement condition, but the first duration is less than the first threshold (that is, the serving cell 120-1 changes slightly and measurement is continuously performed for a period of time, and a distance between the current time and the first stop time is less than the first threshold), the terminal device 110 cannot enter the relaxed neighboring cell measurement mode.

In some embodiments, the terminal device 110 accesses another cell to perform (250) cell reselection, and uses the cell as a serving cell (for example, the cell 120-2). In some embodiments, the terminal device is in a non-relaxed neighboring cell measurement mode and/or a non-relaxed serving cell measurement mode in a time period corresponding to second duration. In other words, after the terminal device 110 initially accesses a next serving cell, the terminal device 110 keeps measuring the serving cell and the neighboring cell within a period of time, to ensure stable cell coverage. In an example, after the terminal device 110 reselects a neighboring cell, after the time period corresponding to the second duration, the terminal device 110 determines a value relationship between the first duration and the first threshold and/or the second duration. For example, after the terminal device 110 reselects the cell 120-2 and measures a neighboring cell for a period of time, the terminal device 110 determines that first duration from a first stop time of the serving cell 120-2 is greater than the first threshold, and the terminal device 110 enters the relaxed neighboring cell measurement mode.

In conclusion, the terminal device 110 determines a relaxed neighboring cell measurement condition based on a feature of the NTN cell and the service stop time of the serving cell. That is, when the serving cell is to stop serving, the terminal device 110 needs to exit the relaxed neighboring cell measurement. In addition, a relaxed serving cell measurement condition of the terminal device 110 is further considered. That is, when the terminal device 110 exits the relaxed neighboring cell measurement mode, the terminal device 110 also exits the relaxed serving cell measurement mode. In this way, even if the relaxed neighboring cell condition in the sense of the measurement result of the serving cell is met, the terminal device 110 may determine, based on the service stop time of the serving cell, whether to exit the relaxed neighboring cell measurement mode. In addition, if the terminal device 110 exits the relaxed neighboring cell measurement mode, the terminal device 110 may exit the relaxed serving cell measurement mode even if relaxed serving cell measurement is met in the sense of the measurement result of the serving cell. In this way, a case in which the terminal device 110 cannot perform neighboring cell measurement and cell reselection in a timely manner is avoided, and a cell reselection delay is reduced.

As shown in 240 in FIG. 2, in an NTN communication system, discontinuous cell coverage exists. In this case, even if neighboring cell measurement is performed, another neighboring cell is not found. This causes meaningless power consumption. In some embodiments, the terminal device 110 may further determine, depending on whether cell coverage exists after the coverage of the serving cell 120-1 ends, whether to enter the relaxed measurement mode. In some embodiments, the terminal device 110 determines that the terminal device 110 is out of cell coverage after the first stop time, and the terminal device 110 enters the relaxed neighboring cell measurement mode. In this way, the terminal device can avoid performing meaningless neighboring cell measurement, to further improve an energy saving level of the terminal device. Because the terminal device 110 determines that the terminal device 110 is out of cell coverage after the first stop time of the serving cell 120-1, the terminal device 110 does not need to measure the serving cell 120-1 at a high measurement frequency. Therefore, in some embodiments, the terminal device 110 also enters the relaxed serving cell measurement mode.

In some embodiments, as described above, the network device 120 has sent the ephemeris information of the cell to the terminal device 110. The terminal device 110 may determine, based on the ephemeris information of the cell, that the terminal device 110 is out of cell coverage after the first stop time. For example, after reselecting a new serving cell, the terminal device 110 may be in a non-relaxed neighboring cell measurement mode and/or a non-relaxed serving cell measurement mode in a time period corresponding to the second duration. For example, after the time period corresponding to the second duration, the terminal device 110 determines whether the terminal device 110 is out of coverage after a stop time of a current serving cell. For example, similar to the embodiments of the first threshold and/or the second threshold, the terminal device 110 may also determine, with reference to the measurement result of the serving cell and a coverage status of the terminal device 110 after the first stop time, whether to enter the relaxed measurement mode. For example, in some embodiments, the terminal device 110 also exits the relaxed serving cell measurement mode after exiting the relaxed neighboring cell measurement mode.

The terminal device 110 may enter the relaxed serving cell measurement mode by determining whether the terminal device 110 is out of coverage after the stop time of the serving cell. If the terminal device 110 determines, based on a feature of discontinuous coverage of the NTN, that the terminal device 110 is to enter discontinuous coverage, the terminal device 110 may enter a relaxed measurement mode. In this manner, meaningless power consumption can be avoided.

As shown in 240 in FIG. 2, in some embodiments, the network device 120 may further send (243), to the terminal device 110, an indication 245 of entering the relaxed measurement mode. Further, the terminal device 110 may directly enter the relaxed measurement mode (for example, the relaxed neighboring cell measurement mode and/or the relaxed serving cell measurement mode) based on the indication.

For example, the terminal device 110 may determine, based on the condition combination used to determine to enter the relaxed measurement mode in the foregoing embodiment, whether to enter the relaxed measurement mode. For example, if at least one of the following occurs, the terminal device 110 may enter the relaxed neighboring cell measurement mode: determining that the first duration from the first stop time is greater than the first threshold, determining that the terminal device 110 is out of coverage after the first stop time, or receiving, from the network device 120, an indication of entering the relaxed neighboring cell measurement mode. For example, if at least one of the following occurs, the terminal device 110 may further enter the relaxed serving cell measurement mode: determining that the first duration from the first stop time is greater than the second threshold, determining that the terminal device 110 is out of coverage after the first stop time, or receiving, from the network device 120, an indication of entering the relaxed neighboring cell measurement mode. For example, based on the foregoing condition, the terminal device 110 may further determine, based on a measurement result for a serving cell, to enter the relaxed measurement mode. For example, if at least one of the foregoing conditions occurs and an RSRP of the serving cell changes slightly in a period of time, the terminal device 110 enters the relaxed measurement mode.

In this way, the terminal device 110 determines whether to enter the relaxed measurement mode by considering the service stop time of the serving cell and determining whether the UE is out of coverage. In other words, when the terminal device 110 determines that the terminal device 110 is to be out of coverage, the terminal device 110 may enter the relaxed neighboring cell measurement mode. For example, the terminal device 110 determines that there is a long period before a service stop time of the serving cell, and the terminal device 110 enters the relaxed measurement mode. In this way, when the foregoing condition is not met, the terminal device 110 exits the relaxed measurement mode. In this way, conditions for entering or exiting the relaxed measurement mode are further refined. In this way, the terminal device 110 determines, based on a feature of discontinuous coverage of the NTN and broadcast of the service stop time of the serving cell, that the terminal device 110 needs to exit the relaxed neighboring cell measurement mode and exit the relaxed serving cell measurement mode only when the terminal device 110 is subsequently located in a coverage area and the service stop time of the serving cell is near. In this way, an energy saving level of the terminal device is further improved.

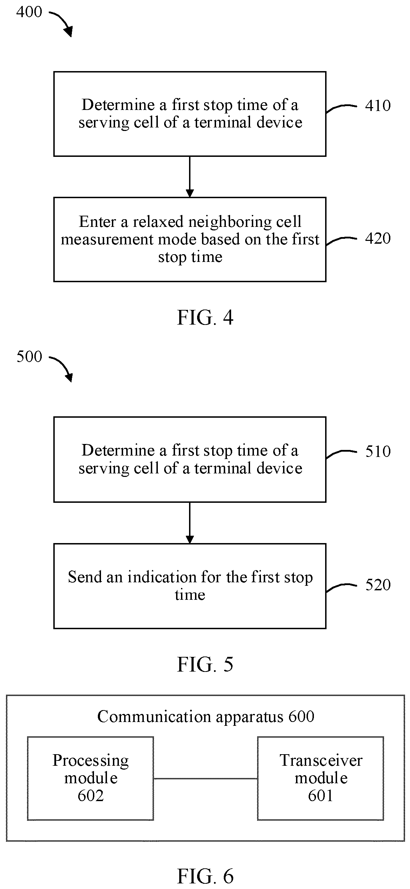

FIG. 4 is a flowchart 400 of implementation at a terminal device according to an embodiment of this disclosure. In a possible implementation, the method 400 may be implemented by the terminal device 110 in the example environment 100. In other possible implementations, the method 400 may alternatively be implemented by another electronic apparatus independent of the example environment 100. In an example, the method 400 is described below by using an example in which the terminal device 110 in the example environment 100 is used for implementation.

In 410, the terminal device 110 determines a first stop time of a serving cell of the terminal device 110. In 420, the terminal device 110 enters a relaxed neighboring cell measurement mode based on the first stop time. In some embodiments, the terminal device 110 enters the relaxed neighboring cell measurement mode in the following manner: The terminal device 110 determines that first duration from the first stop time is greater than a first threshold, and then the terminal device 110 enters the relaxed neighboring cell measurement mode. In some embodiments, the method 400 further includes: The terminal device 110 determines that the first duration from the first stop time is less than or equal to the first threshold, and then exits the relaxed neighboring cell measurement mode. In some embodiments, the method 400 further includes: The terminal device 110 determines that the first duration from the first stop time is greater than a second threshold, and enters a relaxed serving cell measurement mode. In some embodiments, the method 400 further includes: The terminal device 110 determines that the first duration from the first stop time is less than or equal to the second threshold, and exits the relaxed serving cell measurement mode. In some embodiments, a value of the first threshold and/or a value of the second threshold are/is at least one of a predefined threshold, a threshold indicated by the network device 120, or duration required for measuring a neighboring cell by the terminal device.

In some embodiments, the entering a relaxed neighboring cell measurement mode based on a first stop time includes: determining that the terminal device is out of cell coverage after the first stop time, and entering the relaxed neighboring cell measurement mode. In some embodiments, the method 400 further includes: The terminal device 110 enters a relaxed serving cell measurement mode. In some embodiments, the terminal device 110 may determine, based on the ephemeris information of the cell, that the terminal device is out of cell coverage after the first stop time. In some embodiments, the method 400 further includes: The terminal device 110 receives, from the network device, an indication of entering the relaxed neighboring cell measurement mode.

In some embodiments, the method 400 further includes: The terminal device 110 reselects a neighboring cell as a serving cell, and the terminal device 110 is in a non-relaxed neighboring cell measurement mode and/or a non-relaxed serving cell measurement mode in a time period corresponding to second duration. In some embodiments, the method 400 further includes: After the terminal device 110 exits the relaxed neighboring cell measurement mode, the terminal device 110 exits the relaxed serving cell measurement mode.

FIG. 5 is a flowchart 500 of implementation at a terminal device according to an embodiment of this disclosure. In a possible implementation, the method 500 may be implemented by the network device 120 or the network device 130 in the example environment 100. In other possible implementations, the method 500 may alternatively be implemented by another electronic apparatus independent of the example environment 100. In an example, the method 500 is described below by using an example in which the network device 120 in the example environment 100 is used for implementation.

In 510, the network device 120 determines a first stop time of a serving cell of a terminal device. The first stop time is used by the terminal device to enter a relaxed neighboring cell measurement mode. In 520, the network device 120 sends an indication for the first stop time. In some embodiments, the network device 120 sends an indication for a threshold. The threshold is used by the terminal device 110 to determine at least one of the following: entering the relaxed neighboring cell measurement mode, and entering a relaxed serving cell measurement mode. In some embodiments, the threshold is used by the terminal device 110 to determine at least one of the following: exiting the relaxed neighboring cell measurement mode, and exiting the relaxed serving cell measurement mode. In some embodiments, the method 500 further includes: The network device 120 sends ephemeris information of a cell. The ephemeris information is used by the terminal device to determine at least one of the following: entering the relaxed neighboring cell measurement mode, and entering the relaxed serving cell measurement mode. In some embodiments, the method 500 further includes: The network device 120 sends an indication of entering the relaxed neighboring cell measurement mode.

In embodiments provided in this application, the methods provided in embodiments of this application are separately described from perspectives of the network device, the terminal device, and interaction between the network device and the terminal device. To implement functions in the method provided in embodiments of this application, the network device and the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

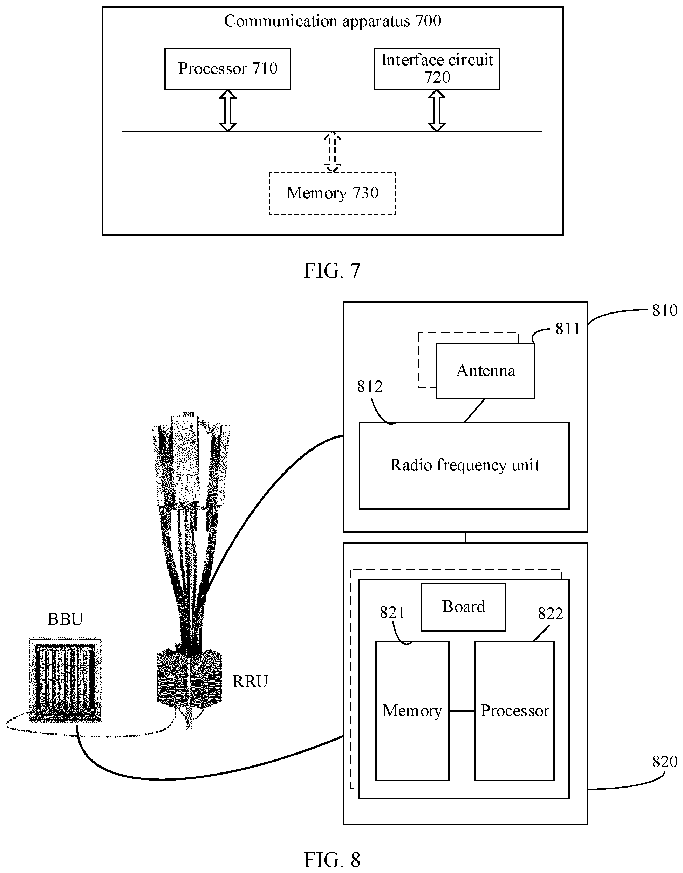

FIG. 6 and FIG. 7 are diagrams of structures of possible communication apparatuses according to embodiments of this application. The communication apparatuses may implement the functions of the terminal device or the network device in the foregoing method embodiments. Therefore, beneficial effects of the foregoing method embodiments can also be implemented. In this embodiment of this application, the communication apparatus may be the terminal device 110 shown in FIG. 1, the network device 120 or 130 shown in FIG. 1, or a module (for example, a chip) used in the terminal device or the network device.

As shown in FIG. 6, the communication apparatus 600 includes a transceiver module 601 and a processing module 602. The communication apparatus 600 may be configured to implement a function of the terminal device or the network device in the method embodiment shown in FIG. 2.

When the communication apparatus 600 is configured to implement the function of the terminal device in the method embodiment in FIG. 2, the transceiver module 601 is configured to determine a first stop time of a serving cell of the terminal device. The processing module 602 is configured to enter a relaxed neighboring cell measurement mode based on the first stop time.

When the communication apparatus 600 is configured to implement the function of the network device in the method embodiment in FIG. 2, the processing module 602 is configured to determine a first stop time of a serving cell of a terminal device. The first stop time is used by the terminal device to enter a relaxed neighboring cell measurement mode. The transceiver module 601 is configured to send an indication for the first stop time to the terminal device.

For more detailed descriptions of the transceiver module 601 and the processing module 602, refer to related descriptions in the foregoing method embodiments. Details are not described herein again.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, or store input data required by the processor 710 to run instructions, or store data generated after the processor 710 runs instructions.

When the communication apparatus 700 is configured to implement a method in the foregoing method embodiments, the processor 710 is configured to perform a function of the processing module 602, and the interface circuit 720 is configured to perform a function of the transceiver module 601.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device. The information is sent by a terminal device to the network device. Alternatively, the chip in the network device sends information to another module (for example, a radio frequency module or an antenna) in the network device. The information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

When the apparatus in embodiments of this application is a network device, the apparatus may be shown in FIG. 8. The apparatus may include one or more radio frequency units, such as a remote radio unit (remote radio unit, RRU) 810 and one or more baseband units 820 (baseband unit, BBU) (which may also be referred to as a digital unit (digital unit, DU)). The RRU 810 may be referred to as a transceiver module. The transceiver module may include a sending module and a receiving module, or the transceiver module may be one module that can implement sending and receiving functions. The transceiver module may correspond to the transceiver module 601 in FIG. 6, that is, may perform an action performed by the transceiver module 601. Optionally, the transceiver module may also be referred to as a transceiver machine, a transceiver circuit, a transceiver, or the like, and may include at least one antenna 811 and a radio frequency unit 812. The RRU 810 is mainly configured to: receive and send radio frequency signals, and perform conversion between a radio frequency signal and a baseband signal. The BBU 810 is mainly configured to perform baseband processing, control a base station, and the like. The RRU 810 and the BBU 820 may be physically disposed together, or may be physically disposed separately, that is, a distributed base station.

The BBU 820 is a control center of the base station, may also be referred to as a processing module, may correspond to the processing module 602 in FIG. 6, and is mainly configured to complete a baseband processing function, such as channel coding, multiplexing, modulation, and spectrum spreading. In addition, the processing module may perform an action performed by the processing module 602. For example, the BBU (processing module) may be configured to control the base station to perform an operation procedure related to the network device in the foregoing method embodiments.

In an example, the BBU 820 may include one or more boards, and a plurality of boards may jointly support a radio access network (for example, an LTE network) of a single access standard, or may separately support radio access networks (for example, an LTE network, a 5G network, or another network) of different access standards. The BBU 820 further includes a memory 821 and a processor 822. The memory 821 is configured to store necessary instructions and data. The processor 822 is configured to control the base station to perform a necessary action, for example, configured to control the base station to perform an operation procedure related to the network device in the foregoing method embodiments. The memory 821 and the processor 822 may serve the one or more boards. In other words, a memory and a processor may be disposed on each board. Alternatively, a plurality of boards may share a same memory and a same processor. In addition, a necessary circuit may further be disposed on each board.

An embodiment of this application provides a communication system. The communication system may include the terminal device in the embodiment shown in FIG. 2, and include the network device in the embodiment shown in FIG. 2. Optionally, the terminal device and the network device in the communication system may perform the communication method shown in FIG. 2.

An embodiment of this application further provides a circuit. The circuit may be coupled to a memory, and may be configured to perform a procedure related to the terminal device or the network device in any one of the foregoing method embodiments. The chip system may include the chip, and may further include another component such as a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any regular processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed communication method and apparatus may be implemented in other manners. For example, the described apparatus embodiment is merely an example. For example, division into the modules is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The modules described as separate components may or may not be physically separate, and components displayed as modules may or may not be physical modules, that is, may be located in one place or may be distributed over a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk drive, or another optical disc storage or a disk storage medium, or another magnetic storage device, or any other medium that can carry or store expected program code in a form of an instruction or a data structure and can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may indicate different objects or a same object, and are merely used to distinguish between indicated objects, but do not imply a specific spatial order, a time order, an importance order, or the like of the indicated objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. **In** addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

## Claims

1. A communication method used in a non-terrestrial network, comprising:
determining a first stop time of a serving cell of a terminal device; and
entering a relaxed neighboring cell measurement mode based on the first stop time.

2. The method according to claim 1, wherein the entering the relaxed neighboring cell measurement mode comprises:
determining that first duration from the first stop time is greater than a first threshold, and entering the relaxed neighboring cell measurement mode.

3. The method according to claim 1, further comprising:
determining that first duration from the first stop time is less than or equal to a first threshold, and exiting the relaxed neighboring cell measurement mode.

4. The method according to claim 1, further comprising:
determining that first duration from the first stop time is greater than a second threshold, and entering a relaxed serving cell measurement mode.

5. The method according to claim 1, further comprising:
determining that first duration from the first stop time is less than or equal to the second threshold, and exiting the relaxed serving cell measurement mode.

6. The method according to claim 5, wherein a value of the first threshold and/or a value of the second threshold are/is:
at least one of a predefined threshold, a threshold indicated by a network device, or duration required for measuring a neighboring cell.

7. The method according to claim 1, wherein the entering the relaxed neighboring cell measurement mode based on the first stop time comprises:
determining that the terminal device is out of cell coverage after the first stop time, and entering the relaxed neighboring cell measurement mode.

8. The method according to claim 7, wherein the method further comprises:
entering a relaxed serving cell measurement mode.

9. The method according to claim 7, wherein the determining that the terminal device is out of cell coverage after the first stop time comprises:
determining, based on ephemeris information of a cell, that the terminal device is out of cell coverage after the first stop time.

10. The method according to claim 1, further comprising:
receiving an indication of entering the relaxed neighboring cell measurement mode.

11. The method according to claim 1, further comprising:
reselecting a neighboring cell as a serving cell, and being in a non-relaxed neighboring cell measurement mode and/or a non-relaxed serving cell measurement mode in a time period corresponding to second duration.

12. The method according to claim 1, further comprising:
exiting the relaxed serving cell measurement mode after exiting the relaxed neighboring cell measurement mode.

13. A communication method used in a non-terrestrial network, comprising:
determining a first stop time of a serving cell of a terminal device, wherein the first stop time is used by the terminal device to enter a relaxed neighboring cell measurement mode; and
sending an indication for the first stop time.

14. The method according to claim 13, further comprising:
sending an indication for a threshold, wherein the threshold is used by the terminal device to determine at least one of the following:
entering the relaxed neighboring cell measurement mode; and
entering a relaxed serving cell measurement mode.

15. The method according to claim 14, wherein the threshold is used by the terminal device to determine at least one of the following:
exiting the relaxed neighboring cell measurement mode; and
exiting the relaxed serving cell measurement mode.

16. The method according to claim 13, further comprising:
sending ephemeris information of a cell, wherein the ephemeris information is used by the terminal device to determine at least one of the following:
entering the relaxed neighboring cell measurement mode; and
entering a relaxed serving cell measurement mode.

17. The method according to claim 13, further comprising:
sending an indication of entering the relaxed neighboring cell measurement mode.

18. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 12 or any one of claims 13 to 16 by using a logic circuit or by executing code instructions.

19. A computer-readable storage medium, wherein the computer-readable storage medium stores instructions, and when the instructions are executed by an electronic device, the electronic device performs the method according to any one of claims 1 to 12 or any one of claims 13 to 16.

20. A computer program product, wherein the computer program product comprises instructions, and when the instructions are executed by an electronic device, the electronic device performs the method according to any one of claims 1 to 12 or any one of claims 13 to 16.
